# EUROPEAN PATENT APPLICATION

(11) **EP 4 752 927 A1**
(43) Date of publication of application: **03.06.2026**
(21) Application number: 24837275.7
(22) Date of filing: 01.11.2024
(51) Int. Cl.: H01H 69/02, H01H 85/165

(54) **METHOD FOR MANUFACTURING ELECTRICAL ELEMENT AND ELECTRICAL ELEMENT**

(30) Priority: 17.10.2024 CN 202411455656
(71) Applicant: Xi'an Sinofuse Electric Co., Ltd., Xi'an, Shaanxi 710100 (CN)
(72) Inventor: HOU, Fengwei, Shaanxi 710100 (CN); CHEN, Tao, Shaanxi 710100 (CN); WU, Dagang, Shaanxi 710100 (CN); HOU, Qiang, Shaanxi 710100 (CN)
(74) Representative: Mitola, Marco
(86) International application number: PCT/CN2024/129496
(87) International publication number: WO 2026/081258

(57) **Abstract**

The present invention provides a manufacturing method for an electrical component and electrical component, relating to the field of manufacturing electrical components. According to the manufacturing method provided by the present invention, the above multiple housing portions are assembled into a housing body by solidifying fluid plastic, and the housing body and the conductor are assembled into a composite structure. According to the manufacturing method provided by the embodiment of the present invention, the tedious dispensing and combination assembly process of the housing body can be omitted, simplifying the manufacturing process. Moreover, according to the manufacturing method provided by the embodiment of the present invention, the sealing performance of the housing body is improved, a large amount of time is saved, and the problem of glue overflow on the surface of the housing body after dispensing can also be avoided.

## Description

### CROSS-REFERENCE TO RELATED APPLICATION

The present invention claims the priority to the Chinese patent application with the filling No. 202411455656.2 filed with the Chinese Patent Office on October 17, 2024, and entitled "MANUFACTURING METHOD FOR ELECTRICAL COMPONENT AND ELECTRICAL COMPONENT", the contents of which are incorporated herein by reference in entirety.

### TECHNICAL FIELD

The present invention relates to the field of electrical component manufacturing, and particularly, to a manufacturing method for an electrical component and an electrical component.

### BACKGROUND ART

Electrical components include tubular devices such as fuses, and the tubular devices have a hollow housing and a conductor passing through the housing. Therefore, the manufacturing process of such electrical components often involves the following process steps: conductor preparation, housing preparation, housing dispensing (i.e., adhesive dispensing), housing assembly, cleaning and fixing, gap dispensing, surface cleaning, resistance testing, and baking for curing.

For fuses, the technological process also involves sand filling, dispensing for sand holes, press-fitting clamps, clamp crimping, appearance cleaning, and product testing. Therefore, the overall production and assembly process for the product is relatively complex, with problems such as low yield rates, high manufacturing costs, and expensive automated production lines during production and assembly.

The key issue causing the above problems lies in the housing preparation stage for the tubular devices. Plastic housings of the tubular devices typically include two parts: an upper housing and a lower housing, each molded through injection molding. The housing bodies need to be bonded through dispensing. However, during dispensing, uniformity and consistency of dispensing are often challenging to maintain stably due to positional and other factors.

If the housing bonding is unreliable or if there are gaps in the housing body, the electrical insulation performance of tubular devices cannot be ensured. In severe cases, the circuit containing the tubular device can be damaged. Additionally, during multiple times of dispensing processes, excess adhesive often seeps out, necessitating additional cleaning steps. The residual adhesive on the conductors exposed at both ends of the tube housing can also potentially affect product performance, leading to numerous disadvantages.

### SUMMARY

Given this, the present invention provides a manufacturing method for an electrical component and an electrical component, and an objective is to address the above technical issues to a certain extent.

A first aspect of the present invention provides a manufacturing method for an electrical component. The electrical component includes a housing body and a conductor passing through the housing body. The manufacturing method includes:
a material preparation and mold clamping (closing) step, executed within a mold (die), wherein the mold is clamped (closed) to injection-mold multiple housing portions;
a transfer step, transferring multiple housing portions and the conductor to a processing position, combining the multiple housing portions, and passing the conductor through the combined multiple housing portions; and
an assembly and mold clamping step, clamping the mold, injecting fluid plastic between adjacent housing portions, and injecting fluid plastic between the conductor and housing portions adjacent to the conductor, and curing the fluid plastic to form the housing body and a composite structure of the housing body and the conductor.

During the execution of the assembly and mold clamping step, the material preparation and mold clamping step is simultaneously executed within the mold for the next electrical component to form multiple housing portions for the next electrical component.

After the assembly and mold clamping step, the transfer step and the assembly and mold clamping step are sequentially executed for the next electrical component to form the composite structure of the next electrical component.

Optionally, the material preparation and mold clamping step further includes placing the conductor in a to-be-operated position within the mold, and the transfer step further includes transferring the conductor from the to-be-operated position to the processing position.

Optionally, the material preparation and mold clamping step further includes forming multiple housing portions at different positions, wherein at least two of the multiple housing portions are arranged in a staggered manner along an extension direction of the housing body.

Optionally, the assembly and mold clamping step further includes placing and curing the fluid plastic on the outer side portion of at least one of the adjacent housing portions.

Optionally, the material preparation and mold clamping step further includes forming a recessed accommodating portion on the outer side portion of at least one of the multiple housing portions, wherein the accommodating portion is configured to accommodate the fluid plastic.

Optionally, the material preparation and mold clamping step further includes forming accommodating portion on the outer side portion of each housing portion, wherein the adjacent housing portions are constructed such that the accommodating portions on the adjacent housing portions engage with each other to provide space for accommodating the fluid plastic.

Optionally, the material preparation and mold clamping step further includes: configuring a housing portion provided with an accommodating portion, such that the accommodating portion is arranged with a first portion open at the edge portion of the housing portion configured to connect adjacent housing portions, and that the accommodating portion is arranged with a second portion communicating with the first portion, located on the side of the first portion away from the edge portion. That is, the accommodating portion is provided with the first portion and the second portion, with the first portion communicating with the second portion. The first portion is located at the edge portion where the housing portion connects to another housing portion, and the second portion is located on the side of the first portion away from the edge portion. The second portion has a first width at a first position and a second width at a second position, wherein the first width is smaller than the second width, and the first position is closer to the first portion compared to the second position.

Optionally, the material preparation and mold clamping step further includes: configuring a housing portion provided with an accommodating portion, such that the width of the second portion gradually increases from a side where the first portion is located to a side away from the first portion.

Optionally, the material preparation and mold clamping step further includes: configuring a housing portion provided with an accommodating portion, such that the width of the second portion has at least once abrupt change from the side where the first portion is located to the side away from the first portion.

Optionally, the material preparation and mold clamping step further includes: configuring a housing portion provided with an accommodating portion, such that the accommodating portion has multiple first portions arranged at intervals along the edge portion, and that the accommodating portion has multiple second portions, with each second portion communicating with a corresponding first portion.

Optionally, the material preparation and mold clamping step further includes: configuring a housing portion provided with an accommodating portion, such that an inner side portion of the housing portion provided with the accommodating portion is provided with a protrusion corresponding in position to the accommodating portion.

Optionally, the material preparation and mold clamping step further includes: forming multiple accommodating portions on an outer side portion of each housing portion, and configuring the housing portion provided with the accommodating portion, such that the housing portion provided with the accommodating portion is provided with protrusions corresponding to individual accommodating portions, and adjacent protrusions are connected.

Optionally, the material preparation and mold clamping step further includes: forming a recessed filling portion at the edge portion of the housing portion configured to connect adjacent housing portions, wherein the adjacent housing portions are configured such that the filling portions located on the adjacent housing portions engage with each other to provide space for accommodating fluid plastic. On the housing portion provided with the accommodating portion, the filling portion communicates with the accommodating portion, and the fluid plastic is configured to be injected into the filling portion through the accommodating portion.

Optionally, the material preparation and mold clamping step further includes: forming a recessed filling portion at the edge portion of the housing portion configured to connect adjacent housing portions, with the filling portion also configured to be open from the outer side portion of the housing portion, wherein the adjacent housing portions are configured such that the filling portions located on the adjacent housing portions engage with each other to provide space for accommodating fluid plastic.

Optionally, the material preparation and mold clamping step further includes: configuring adjacent housing portions such that the connecting seam formed by the adjacent housing portions is provided with a turning extension segment located on a side where the internal space of the housing body is located. The turning extension segment extends from the filling portion and terminates at the internal space of the housing body, with at least one change in the extension direction.

Optionally, the material preparation and mold clamping step further includes: forming a protruding positioning portion on the inner side portion of the housing portion, with the portion of the positioning portion exceeding the housing portion configured to connect adjacent housing portions. On the inner side portion of the housing portion, adjacent to the housing portion where the positioning portion is located, a recessed portion corresponding in position to the positioning portion is formed, wherein the recessed portion is configured to allow the positioning portion to be inserted during the combination of multiple housing portions.

Optionally, the material preparation and mold clamping step further includes: forming a protruding structure on the inner side portion of the housing portion, and configuring the housing portion such that the housing portion is provided with a reinforcing structure connecting the protruding structure and the inner side portion of the housing portion.

Optionally, the assembly and mold clamping step further includes: configuring the conductor such that the conductor has a through hole connecting both sides of the conductor. Fluid plastic is also injected into the through hole to connect the cured fluid plastic on both sides of the conductor after curing, wherein the two sides of the conductor respectively face two housing portions.

Optionally, the manufacturing method further includes a testing and processing step of the composite structure, testing the resistance of the conductor of the composite structure; filling the housing body of the composite structure with insulating particles, and sealing the housing body to form the electrical component; and conducting electrical performance and insulation performance tests on the electrical component.

A second aspect of the present invention provides an electrical component, and the electrical component includes a housing body, wherein the housing body includes:
multiple housing portions, with the housing portions configured to be formed by injection molding; and
a connecting member, wherein the connecting member is located between adjacent housing portions and configured to connect the combined multiple housing portions to form the housing body,
wherein a portion of the connecting member is located on the outer side portion of at least one of the adjacent housing portions.

Optionally, the outer side portion of at least one of the multiple housing portions is provided with a recessed accommodating portion, wherein the accommodating portion is configured to accommodate a portion of the connecting member.

Optionally, the outer side portion of each housing portion is provided with an accommodating portion, with adjacent housing portions configured such that the accommodating portions on the adjacent housing portions engage with each other to provide space for accommodating a portion of the connecting member.

Optionally, the accommodating portion is arranged with a first portion open at the edge portion of the housing portion configured to connect adjacent housing portions, and the accommodating portion is arranged with a second portion communicating with the first portion, located on the side of the first portion away from the edge portion. That is, the accommodating portion is provided with the first portion and the second portion, with the first portion communicating with the second portion. The first portion is located at the edge portion where a housing portion connects to another housing portion, and the second portion is located on the side of the first portion away from the edge portion. The second portion has a first width at a first position and a second width at a second position, wherein the first width is smaller than the second width, and the first position is closer to the first portion compared to the second position.

Optionally, the width of the second portion gradually increases from a side where the first portion is located to a side away from the first portion.

Optionally, the width of the second portion has at least once abrupt change from the side where the first portion is located to the side away from the first portion.

Optionally, the accommodating portion is provided with multiple first portions arranged at intervals along the edge portion, and the accommodating portion is arranged with multiple second portions, with each second portion communicating with a corresponding first portion.

Optionally, the inner side portion of the housing portion is provided with a protrusion corresponding in position to the accommodating portion, and the protrusion protrudes from the inner side portion of the housing portion toward a direction away from the inner side portion of the housing portion.

Optionally, the outer side portion of each housing portion forms multiple accommodating portions, the inner side portion of the housing body is provided with protrusions corresponding one-to-one to the accommodating portions formed by the housing body, and adjacent protrusions are connected to each other.

Optionally, adjacent housing portions are constructed such that the connecting seam formed by the adjacent housing portions is provided with a turning extension segment located on a side where the internal space of the housing body is located, wherein a recessed filling portion is formed on the edge portion of the housing portion configured to connect adjacent housing portions, and the turning extension segment extends from the filling portion and terminates at the internal space of the housing body, with at least one change in the extension direction. One of the adjacent housing portions is provided with a step portion protruding from the inner side portion of the housing portion, and the step portion is connected to the edge portion of one of the adjacent housing portions configured to connect to the other of the adjacent housing portions to form a step surface. The inner side portion of the other of the adjacent housing portions engages with the step surface to form the turning extension segment; and the step portion is formed on the protrusion.

Optionally, a recessed filling portion is formed on the edge portion of the housing portion configured to connect adjacent housing portions, wherein adjacent housing portions are constructed such that the filling portions on the adjacent housing portions engage with each other to provide space for accommodating the connecting member.

Optionally, the outer side portion of at least one of the multiple housing portions is provided with a recessed accommodating portion, wherein the accommodating portion is configured to accommodate a portion of the connecting member. The adjacent housing portions are constructed such that the accommodating portion on the same housing portion communicates with the filling portion.

Optionally, the adjacent housing portions are constructed such that the connecting seam formed by the adjacent housing portions is provided with a turning extension segment located on a side where the internal space of the housing body is located. The turning extension segment extends from the filling portion and terminates at the internal space of the housing body, with at least one change in the extension direction.

Optionally, one of the adjacent housing portions is provided with a step portion protruding from the inner side portion of the housing portion, and the step portion is connected to the edge portion of one of the adjacent housing portions configured to connect to the other of the adjacent housing portions to form a step surface. That is, the step portion is connected to an edge portion where one of the two adjacent housing portions is connected to the other, thus forming a step surface. An edge portion of the other of the adjacent housing portions configured to connect with one of the adjacent housing portions engages with the step surface to form a turning extension segment. That is, the edge portion of the other of the two adjacent housing portions connected to the one engages with the step surface to form the turning extension segment.

Optionally, a protruding positioning portion is formed on the inner side portion of the housing portion, with the portion of the positioning portion exceeding the housing portion configured to connect adjacent housing portions. On the inner side portion of the other housing portion, adjacent to the housing portion where the positioning portion is located, a recessed portion corresponding in position to the positioning portion is formed, wherein the recessed portion is configured to allow the positioning portion to be inserted during the combination of multiple housing portions.

Optionally, one of the adjacent housing portions is provided with a step portion protruding from the inner side portion of the housing portion, and the step portion is connected to the edge portion of one of the adjacent housing portions configured to connect to the other of the adjacent housing portions to form a step surface. That is, the step portion is connected to an edge portion where one of the two adjacent housing portions is connected to the other, thus forming a step surface. An edge portion of the other of the adjacent housing portions configured to connect with one of the adjacent housing portions engages with the step surface to form a connecting seam. That is, the edge portion of the other of the two adjacent housing portions connected to the one engages with the step surface to form the connecting seam. The connecting seam is provided with a turning extension segment that changes its extension direction once. The recessed portion is formed on the step portion.

Optionally, a protruding structure is formed on the inner side portion of the housing portion, wherein the protruding structure is provided with a recessed portion. The housing portion is provided with a reinforcing structure connecting the protruding structure and the inner side portion of the housing portion.

Optionally, the electrical component further includes a conductor, and the conductor passes through the housing portion. The connecting member is also located between the conductor and the housing portion to connect the housing portion and the conductor. The conductor is provided with a through hole connecting both sides of the conductor, and a portion of the connecting member passes through the through hole to connect a portion of the connecting member arranged on each side of the conductor, respectively. Both sides of the conductor respectively face two housing portions.

According to the manufacturing method provided by the present invention, the above multiple housing portions are assembled into a housing body by solidifying fluid plastic, and the housing body and the conductor are assembled into a composite structure. According to the manufacturing method provided by the embodiment of the present invention, the tedious dispensing and combination assembly process of the housing body can be omitted, simplifying the manufacturing process. Moreover, according to the manufacturing method provided by the embodiment of the present invention, the sealing performance of the housing body is improved, a large amount of time is saved, and the problem of glue overflow on the surface of the housing body after dispensing can also be avoided.

To make the above objectives, features, and advantages of the present invention more evident and comprehensible, the following preferred embodiments are described in detail with the drawings.

### BRIEF DESCRIPTION OF DRAWINGS

To more clearly illustrate the technical solutions of the embodiments of the present invention, the following will briefly introduce the drawings used in the embodiments. It should be understood that the following drawings only show some embodiments of the present invention, and therefore it should not be regarded as a limitation on the scope. Those ordinary skilled in the art can also obtain other related drawings based on these drawings without inventive effort.
FIG. 1 is a schematic diagram of a flowchart of manufacturing a single electrical component in a manufacturing method for an electrical component provided by the embodiment of the present invention;
FIG. 2 is a schematic diagram of a flowchart of a continuous manufacturing process in a manufacturing method for an electrical component provided by the embodiment of the present invention;
FIG. 3 is a schematic three-dimensional view of a fuse provided by the embodiment of the present invention;
FIG. 4 is a schematic three-dimensional view of a partial structure of a fuse provided by the embodiment of the present invention;
FIG. 5 is a schematic three-dimensional view of a partial structure of another fuse provided by the embodiment of the present invention;
FIG. 6 is a partial schematic view of the fuse in FIG. 3;
FIG. 7 is a schematic sectional view of another fuse provided by the embodiment of the present invention;
FIG. 8 is a schematic three-dimensional view of a housing portion of another fuse provided by the embodiment of the present invention;
FIG. 9 is a schematic three-dimensional view of another housing portion of another fuse provided by the embodiment of the present invention;
FIG. 10 is a schematic three-dimensional view of a partial structure of another fuse provided by the embodiment of the present invention;
FIG. 11 is a partial schematic view of the fuse in FIG. 8;
FIG. 12 is a schematic sectional view of another fuse provided by the embodiment of the present invention;
FIG. 13 is a schematic sectional view of the fuse in FIG. 1;
FIG. 14 is a partial schematic view of the fuse in FIG. 11;
FIG. 15 is a schematic three-dimensional view of a housing portion of a fuse in FIG. 1; and
FIG. 16 is a schematic three-dimensional view of another housing portion of a fuse in FIG. 1.

### Reference numerals

10 - housing body; 12 - housing portion; 14 - accommodating portion; 16 - first portion; 18 - second portion; 20 - protrusion; 22 - filling portion; 24 - connecting seam; 26 - turning extension segment; 28 - step portion; 30 - edge portion; 32 - positioning portion; 34 - recessed portion; 36 - reinforcing structure; 38 - connecting member; 40 - conductor; 42 - through hole; 44 - sand vibration hole; 46 - protruding structure.

### DETAILED DESCRIPTION OF EMBODIMENTS

A clear and complete description of the technical solutions of the present invention will be given below in connection with the drawings. Obviously, the described embodiments are a portion of the embodiments of the present invention and not all of the embodiments. Based on the embodiments of the present invention, all other embodiments obtained by those skilled in the art without inventive effort shall fall within the protection scope of the present invention.

In the description of the present invention, it should be noted that the terms "center", "top", "bottom", "left", "right", "vertical", "horizontal", "inside", "outside", etc. indicate an orientation or positional relationship based on the orientation or positional relationship shown in the accompanying drawings and are intended only to facilitate and simplify the description of the present invention, not to indicate or imply that the device or element referred to must have a particular orientation, be constructed and operate in a particular orientation, and therefore are not to be construed as limiting the present invention. In addition, the terms "first", "second" and "third" are used for descriptive purposes only and are not to be construed as indicating or implying relative importance.

In the description of the present invention, it should also be noted that unless otherwise clearly stipulated and limited, the terms "provide", "mount", "interconnect", and "connect" should be understood in a broad sense, for example, it can be a fixed connection, a detachable connection, or an integral connection; it can be a mechanical connection or an electrical connection; and it can be a direct connection, an indirect connection through an intermediary, or an internal communication between two components. Those of ordinary skill in the art can understand the meanings of the above terms in the present invention according to specific situations.

In addition, the technical solutions between the various embodiments of the present invention can be combined with each other, but only based on what can be achieved by those of ordinary skill in the art. When the combination of technical solutions contradicts each other or cannot be realized, it should be considered that the combination of technical solutions does not exist and is not within the scope of protection claimed by the present invention.

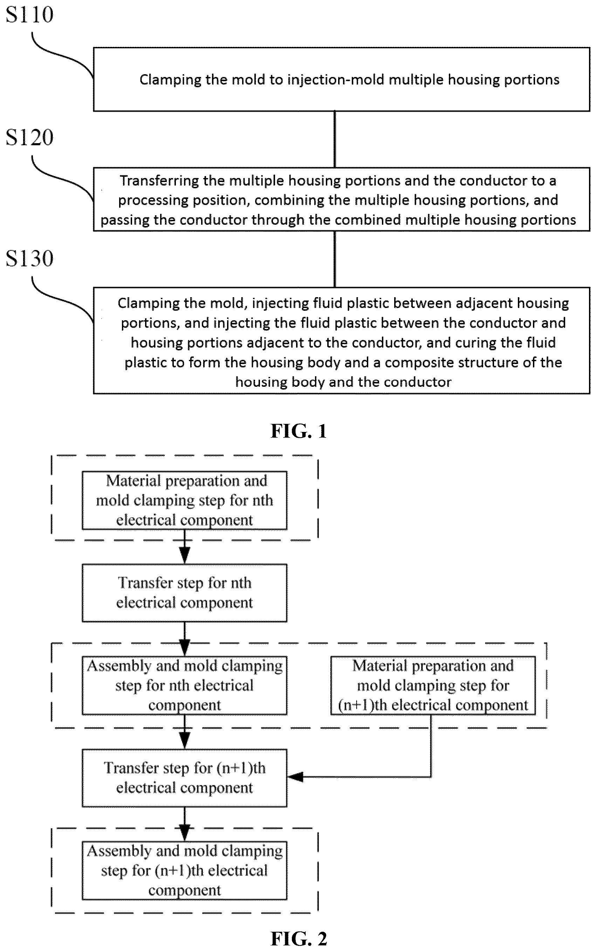

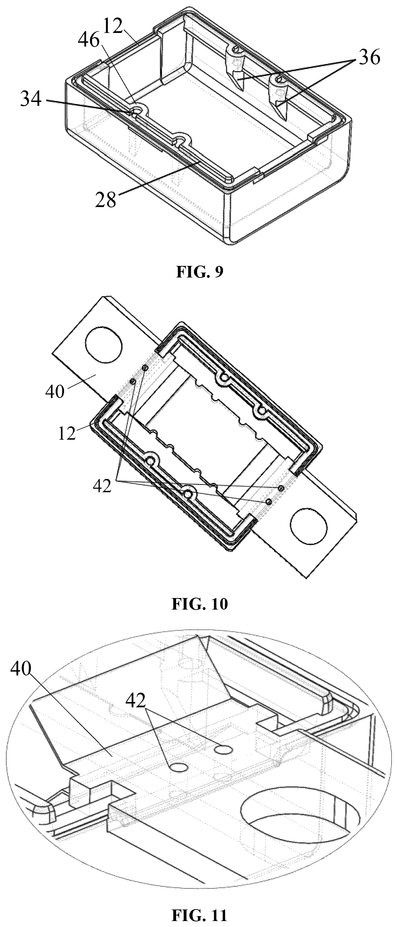

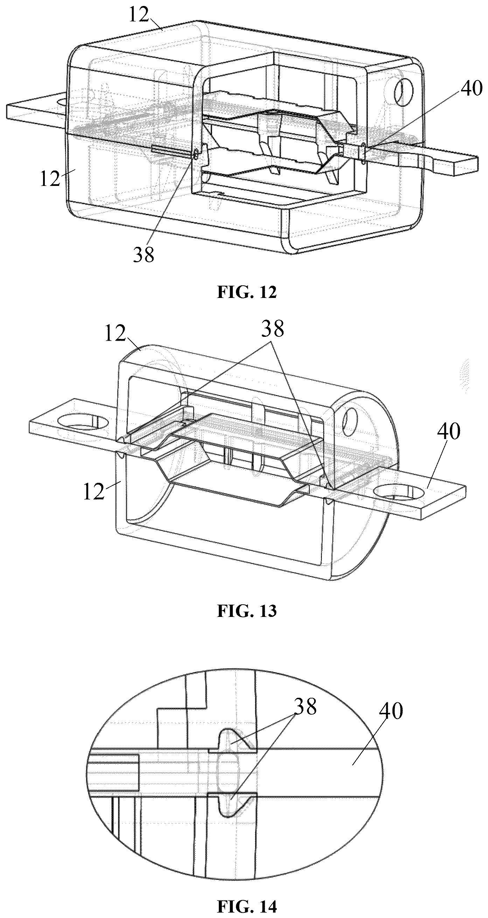

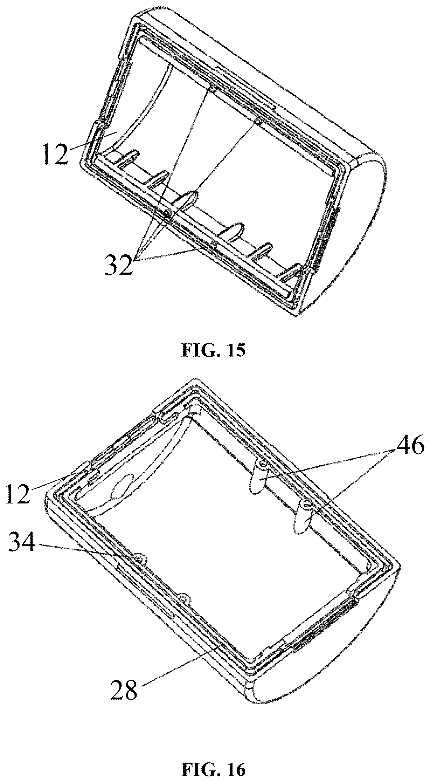

According to the manufacturing method for an electrical component provided in the first aspect of the embodiments of the present invention, the steps of the manufacturing method for an electrical component will be described specifically below in connection with FIGS. 1 to 16.

The first aspect of the embodiments of the present invention provides a manufacturing method for an electrical component. Referring to FIG. 1, the electrical component includes a housing body 10 and a conductor 40 passing through the housing body 10. The manufacturing method includes:
the material preparation and mold clamping step S110, executed within a mold, wherein the mold is clamped to injection-mold multiple housing portions 12;
the transfer step S120, transferring multiple housing portions 12 mentioned above and the conductor 40 to a processing position, combining the multiple housing portions 12, and passing the conductor 40 through the combined multiple housing portions 12 mentioned above; and
the assembly and mold clamping step S130, clamping the mold, injecting fluid plastic between adjacent housing portions 12, and injecting fluid plastic between the conductor 40 and housing portions 12 adjacent to the conductor 40, and curing the fluid plastic to form the housing body 10 and a composite structure of the housing body 10 and the conductor 40.

Thus, according to the manufacturing method provided by the embodiment of the present invention, the above multiple housing portions 12 are assembled into a housing body 10 by solidifying fluid plastic, and the housing body 10 and the conductor 40 are assembled into a composite structure. According to the manufacturing method provided by the embodiment of the present invention, the tedious dispensing and combination assembly process of the housing body 10 can be omitted, simplifying the manufacturing process. Moreover, according to the manufacturing method provided by the embodiment of the present invention, the sealing performance of the housing body 10 is improved, a large amount of time is saved, and the problem of glue overflow on the surface of the housing body 10 after dispensing can also be avoided. In the embodiment, during the execution of the assembly and mold clamping step, the material preparation and mold clamping step is simultaneously executed within the mold for the next electrical component to form multiple housing portions 12 mentioned above for the next electrical component.

In the embodiment, after the assembly and mold clamping step, the transfer step and the assembly and mold clamping step are sequentially executed for the next electrical component to form the composite structure of the next electrical component.

As shown in FIG. 2, according to the manufacturing method provided by the embodiment of the present invention, for the electrical component currently to be produced, during the assembly and mold clamping step, not only is the composite structure of the housing body 10 and the conductor 40 of the electrical component to be produced manufactured by injecting and curing fluid plastic, but simultaneously, during the execution of the assembly and mold clamping step for the current electrical component (refer to the nth electrical component in FIG. 2, where n is a positive integer), a material preparation and mold clamping step is synchronously performed for the next electrical component to be produced (i.e., the (n+1)th electrical component) to form multiple housing portions 12 for the next electrical component.

In other words, when assembling the composite structure of the current electrical component, the manufacturing of multiple housing portions 12 for the next electrical component is already initiated synchronously. Subsequently, after the assembly and mold clamping step for the current electrical component, that is, after the material preparation and mold clamping step for the next electrical component, the transfer step and the assembly and mold clamping step are further executed for the next electrical component to produce the composite structure of the housing body 10 and the conductor 40 for the next electrical component. At this point, the "next electrical component" becomes the "current electrical component" being produced, and the assembly and mold clamping step of the electrical component is again synchronously executed with the material preparation and mold clamping step. After the material preparation and mold clamping step, the transfer step and the assembly and mold clamping step are continuously executed to produce the composite structure of subsequent electrical components.

Thus, according to the manufacturing method provided by the embodiment of the present invention, at the time when executing the assembly and mold clamping step for the previous electrical component, the material preparation and mold clamping step is initiated to form multiple housing portions 12 for the next electrical component, followed by the transfer step and the assembly and mold clamping step for the next electrical component. This forms a cyclical manufacturing process.

In FIG. 2, the "arrows" represent the sequence of step execution, indicating that the steps pointed to by the arrows are executed after the steps at the starting point of the arrows. Furthermore, in FIG. 2, two parallel steps in the horizontal direction indicate that the two steps are executed synchronously, meaning the assembly and mold clamping step for the nth electrical component and the material preparation and mold clamping step for the (n+1)th electrical component are executed synchronously. That is, the assembly and mold clamping step for the current electrical component and the material preparation and mold clamping step for the next electrical component, as described above, are executed synchronously. In addition, in FIG. 2, "dotted-line boxes" indicate that a mold clamping operation occurs during the steps within the dotted-line boxes. Therefore, as seen in FIG. 2, the assembly and mold clamping step for the nth electrical component and the material preparation and mold clamping step for the (n+1)th electrical component share a single mold clamping operation.

According to the manufacturing method provided by the embodiment of the present invention, on the one hand, the approaches ensure the continuous and efficient execution of the manufacturing method as described above. That is, it ensures uninterrupted production of electrical components, thereby facilitating the efficient production of the electrical components. On the other hand, the manufacturing method provided by the embodiment of the present invention cleverly reuses the mold clamping operation of the mold to achieve high efficiency, which will be explained in detail in the following description.

The manufacturing method provided by the embodiment of the present invention aims to simplify the production process of electrical components. More precisely, the objective is to simplify the production process of the composite structure formed by the housing body 10 and the conductor 40 of the electrical component. This optimization is performed on both the individual steps and the overall process of the manufacturing method.

For the optimization of individual steps in the manufacturing method, as mentioned in the descriptions above, the optimization of individual steps in the manufacturing method is primarily reflected in the material preparation and mold clamping step and the assembly and mold clamping step. In the two steps, the manufacturing method provided by the embodiment of the present invention does not rely on the cumbersome assembly steps based on dispensing operations. Instead, during the material preparation and mold clamping step, the first mold clamping operation of the mold forms multiple housing portions 12 that are included in the housing body 10 to be formed. The multiple housing portions 12 are produced as components of the electrical component. Subsequently, during the assembly and mold clamping step, the second mold clamping operation is performed. In the mold, fluid plastic is injected using an injection molding process, connecting the housing portions 12 and the conductor 40 into an integral structure, thereby forming the composite structure.

Thus, the optimization of individual steps in the manufacturing method is mainly reflected in the significant advantages of the material preparation and mold clamping step and the assembly and mold clamping step over the dispensing-based assembly step. This is because the injection molding process offers significantly higher uniformity, consistency, and sealing performance compared to dispensing operations, thereby effectively maintaining product stability. During the execution of the process, compared to the dispensing operation, the injection molding process does not or is less likely to spill material and does not require repeated cleaning (in the case of injection molding, the material is the aforementioned fluid plastic, and in the case of dispensing, the material is the adhesive itself). Therefore, there is virtually no need to consider the possibility that the injection molding process can leave residual material on the conductor 40, which may have an impact on the performance of the conductor 40 or even the electrical component.

Specifically, since the material is under the influence of injection molding pressure and high-temperature fluid states, the adhesive performance for the housing portions 12 exceeds that of glue in dispensing operations. The sealing performance inside the housing body 10 of the electrical component is also better, with no risk of glue leakage on the product surface. Therefore, the mounting and fixation of clamps, the cleaning of spilled glue, and the baking and curing process can be directly eliminated. This not only simplifies the steps required in the process flow but also addresses a series of product quality issues caused by the instability of manual dispensing or equipment-based dispensing and the glue volume control instability arising from equipment fluctuations.

For the optimization of the overall process of the manufacturing method, as mentioned above, it essentially bases on the reuse of the mold clamping operation provided by the manufacturing method for the embodiment of the present invention. As is well known, during injection molding operations, the mold remains in a closed state, and each injection is performed while the mold is clamped. Referring to the optimization of individual steps in the manufacturing method described earlier, the manufacturing method provided by the embodiment of the present invention includes the execution of two mold clamping operations during the material preparation and mold clamping step and the assembly and mold clamping step. For the same electrical component, the first mold clamping corresponds to the first injection molding, which is for producing the multiple housing portions 12 of the housing body 10 of the electrical component. The second mold clamping corresponds to the second injection molding, which is for combining and connecting the housing portions 12 with the conductor 40 into a composite structure.

In other words, for the same electrical component, the first mold clamping is for injection molding to produce the parts of the electrical component, and the second mold clamping is for injection molding to connect the parts with the conductor 40. Therefore, compared to a simple linear production process, the manufacturing method provided by the embodiments of the present invention always reuses the second mold clamping, i.e., the mold clamping in the assembly and mold clamping step. During the second mold clamping of the mold, the first mold clamping and first injection molding for the next electrical component are performed synchronously in the mold, forming the multiple housing portions 12 of the next electrical component. Thus, in terms of the overall flow of the manufacturing method, the mold clamping process is fully utilized.

According to the manufacturing method provided by the embodiments of the present invention, the material preparation and mold clamping step can further include placing the conductor 40 in a to-be-operated position within the mold, and the transfer step can further include transferring the conductor 40 from the to-be-operated position to the processing position.

Thus, according to the manufacturing method provided by the embodiments of the present invention, since the material preparation and mold clamping step for the next electrical component is performed after the assembly and mold clamping step of the current electrical component, the material preparation and mold clamping step for the next electrical component also includes, as described above, placing the conductor 40 of the next electrical component in the to-be-operated position within the mold. Subsequently, the conductor 40 will be transferred from the to-be-operated position to the processing position during the transfer step performed later.

The manufacturing method provided by the present invention will be further described below in conjunction with an actual production process.

In the embodiment, the electronic component can specifically be, for example, a fuse. The housing body 10 of the fuse, commonly referred to as the tube housing, can have a rectangular, circular, or elliptical structure (all of these shapes can be the sectional shapes of the housing body 10). The material of the tube housing includes, but is not limited to, materials suitable for the injection molding process. Optionally, the material of the tube housing can be a thermoplastic material with flame-retardant cushioning properties, such as PA6T+GF (PA6T, nylon 6t; GF, glass fiber; PA6T+GF refers to glass fiber-reinforced nylon 6T, hereinafter the same), PA5T+GF (glass fiber-reinforced nylon 5T, PA5T), PA10T+GF (glass fiber-reinforced nylon 10T), PA66+GF (glass fiber-reinforced nylon 66, PA66), PEEK+GF (glass fiber-reinforced polyetheretherketone; PEEK, Polyetheretherketone), or PPSU+GF (glass fiber-reinforced polyphenylene sulfone resins; PPSU, Polyphenylene sulfone resins). The conductor 40 of the fuse is commonly referred to as the fuse element.

In the embodiment, it is feasible that the material of the housing portions 12 and the material of the fluid plastic can be the same or different.

In the embodiment, the injection molding process that forms the composite structure is essentially an insert injection molding process. Specifically, the manufacturing method provided by the present invention can be implemented as follows.

The fuse element is positioned and mounted using tooling fixtures, along with a corresponding automated pickup device (robotic arm and clamping and positioning tools). The actions and motion paths of the automated pickup device are adjusted and set to prepare for the insert injection molding of the fuse element.

Next, the automated pickup device grabs the fuse element, and positions and mounts it at a fuse element reserved position within the mold, referred to as the to-be-operated position in the method described above. The position can be, for example, the recessed portion 34 that accommodates the fuse element. During mold clamping, the fuse element positioned here does not interfere with the mold clamping process.

Then, the first mold clamping operation is performed, using an integrated forming mold (with multiple cavities and mechanical mechanisms arranged within the mold cavity) for the formation operation. The first mold clamping simultaneously forms multiple housing portions 12 of the tube housing of the fuse (for example, two housing portion portions 12). Depending on the docking direction of the two housing portions 12, they are referred to as the upper housing portion 12 and the lower housing portion 12. After mold opening, the injection-molded multiple housing portions are switched and transferred to corresponding processing positions to be assembled (i.e., the spatial positions of the transferred multiple housing portions change). The fuse element is loaded into the reserved processing position of the mold (where the processing position is located at the center of the multiple housing portions). Before the second mold clamping, the relative positions between the fuse element and the multiple housing portions are determined but remain in an unassembled state with no connections yet.

Based on the unassembled state described above, the second mold clamping is performed. At this time, the insert injection molding of the fuse element (forming a composite structure of the fuse element and the tube housing) and the upper housing portion 12 and lower housing portion 12 of the next fuse element are simultaneously carried out in different cavities of the mold. After each mold clamping operation, the upper housing portion 12 and lower housing portion 12 of the tube housing for the next fuse, and the composite structure formed by the injection molding of the fuse element in the mold for the currently manufactured fuse, can be operated simultaneously. Thus, two injection molding processes for two fuses are synchronized with a single mold clamping action without manual intervention.

After completing injection molding corresponding to the second mold clamping, a mold opening operation is performed. The mechanical structure of the mold is used to shift the molded cavity. For example, in the embodiment, the above cavity for forming the multiple housing portions can be an independent cavity, and the cavity for assembling the housing portions and the fuse element is another independent cavity. The two cavities can be arranged on the same sliding rail to achieve shifting of the cavities within the mold. In other words, by shifting the cavities, the cavity that has completed the molding of multiple housing portions is moved to the position for assembly and mold clamping, to assemble and clamp the mold. At the same time, since the assembly of the composite structure has been completed in the previous mold clamping within the other cavity, the cavity can move to a position where an automated pickup device can remove the composite structure from the cavity.

The automated pickup device grabs a new fuse element (i.e., the fuse element for the next fuse) for positioning and mounting and simultaneously removes the finished product (i.e., the composite structure of the fuse tube housing and the fuse element) formed by integral injection molding from the mold within a shifting stroke. Subsequently, the automated pickup device grabs another new fuse element (i.e., the fuse element for the subsequent fuse) and, after reaching the designated stroke position, stands by (i.e., the to-be-operated position described above) to await the completion of the injection molding process, preparing for the next insert injection molding of the fuse element. The process repeats continuously.

In the above implementation, the three actions above (i.e., the material preparation and mold clamping step, the transfer step, and the assembly and mold clamping step performed for the same fuse) form an injection molding cycle for finished products. The duration of the injection molding cycle generally ranges from 20 to 100 seconds and can also range from 30 to 60 seconds, or 40 to 80 seconds. By repeating the above mold opening and mold clamping operations, automated pickup of injection-molded inserts (fuse elements) and injection-molded finished products (composite structures) can achieve stable and reliable automated continuous production operations.

According to the manufacturing method provided by the embodiments of the present invention, the material preparation and mold clamping step can further include forming multiple housing portions 12 at different positions, wherein at least two of the foregoing multiple housing portions 12 are arranged in a staggered manner along an extension direction of the housing body 10. In the embodiment, the staggered arrangement facilitates the simplification of motion mechanisms within the mold and simultaneously facilitates the conversion action of cavity positions used for assembly and mold clamping when embedding conductors during the assembly and mold clamping step.

In the embodiment, the "extension direction of the housing body 10" mentioned herein should be understood as follows. The housing body 10 has a regular or relatively regular geometric shape, where the extension direction of the feature that can be obtained from the geometric shape and used to determine the specific shape of the geometric shape can be used as the extension direction of the housing body 10.

Taking a prism as an example, a prism can have a regular geometric shape. The edges sandwiched between the two bases can be regarded as the feature that determines the specific shape of the prism. The extension direction of these edges is the extension direction of the prism.

Additionally, for relatively regular geometric shapes, take a broader column as an example. A column has two identical bases. The bases can have regular geometric shapes, such as a square mentioned above (in which case the column is a quadrangular prism), a circle (in which case the column can be a cylinder), or an ellipse. For instance, with an elliptical base, the side surfaces sandwiched between the two bases can be regarded as the feature that determines the specific shape of the column. The extension direction of the side surfaces is the extension direction of the column.

In an embodiment, as an example, the housing body 10 of an electrical component manufactured using the manufacturing method provided in the present invention can be a column. The base can, for example, be circular, thus forming the housing body 10 as a cylinder. Or, the base can, for example, be square (rectangular), and thus the housing body 10 can be formed, for example, as a rectangular body.

It should be noted that, in practical applications, for example, in cases where the housing body 10 is a rectangular body, the adjacent side surfaces of the housing body 10 can transition using rounded corners. In cases where the housing body 10 is a cylinder body, the transition between the base and the side surfaces of the housing body 10 can also use rounded or chamfered corners. These transitional forms ensure that the shape of the housing body 10 is not strictly a cuboid or cylinder. However, it should be understood that according to the electrical component manufactured by the manufacturing method provided in the present invention, the cuboid shape, cylindrical shape, and other shapes not specifically described of the housing body 10 do not conflict with the setting of rounded and/or chamfered corners of the housing body 10 itself.

In the embodiment, taking the housing body 10 with a cuboid shape as an example, its extension direction can include a length direction, a width direction, and a height direction based on its length, width, and height. For the length direction and width direction, when both are horizontal, they can be referred to as the left-right direction and the front-rear direction in space. This means that at least two of the aforementioned multiple housing portions 12 can be staggered in the left-right direction or the front-rear direction. The term "staggered" includes having a certain interval in the corresponding direction (e.g., left-right direction) and having a certain interval in the direction perpendicular to the left-right direction (e.g., height direction).

Additionally, according to the manufacturing method provided in the embodiments of the present invention, the staggered arrangement of at least two housing portions 12 means that each of the at least two housing portions 12 has a corresponding other housing portion 12, and the two present a staggered state in space as described above. As an example, the housing body 10 can be formed by two housing portions 12. For instance, the housing body 10 can have the cuboid shape described above, with the two housing portions 12 connected along the height direction. For this example, the two housing portions 12 can be staggered in the width direction of the housing body 10 during forming.

Furthermore, in the embodiment, the staggered arrangement of at least two housing portions 12 should be understood as the housing portions 12 being staggered in spatial position as described above, without specific limitations on the spatial orientation of the housing portions 12 themselves. In other words, during the process of assembling different housing portions 12 into the composite structure after forming, based on the position and spatial orientation of the housing portions 12, different gripping motion paths can be configured for the housing portions 12. Specifically, the housing portions 12 can be gripped and transferred to the processing position via translational motion, or it can be gripped and transferred to the processing position via a combination of translational motion and rotational motion.

According to the manufacturing method provided in the embodiments of the present invention, the assembly and mold clamping step can further include placing and curing the fluid plastic on the outer side portion of at least one of the adjacent housing portions 12.

In an embodiment, when adjacent housing portions 12 are connected, the fluid plastic is located on the outer side portion of at least one of them. Once the fluid plastic solidifies, the fluid plastic generally includes a part connecting the adjacent housing portions 12 between the adjacent housing portions 12 and can also include a part located on the outer side of at least one housing portion 12. The portion is connected to the plastic between the housing portions 12 and adheres to the outer side of at least one housing portion 12. By adhering to the outer side of at least one housing portion 12, the plastic provides additional adhesion between the plastic and the housing portion 12, ensuring better connection performance for the solidified fluid plastic.

In the embodiment, the part of the plastic located on the outer side of at least one housing portion 12 is referred to herein as the connecting member 38. As an example, the connecting member 38 can protrude from the outer side of the housing portion 12 to which it adheres. However, in other examples, the connecting member 38 can also fill some recessed features that are pre-injection molded on the outer side of the housing portion 12 during the material preparation and mold clamping step, such that the connecting member 38 becomes flush with the outer side of the housing portion 12. These examples will be elaborated upon in the following sections.

According to the manufacturing method provided in the embodiments of the present invention, as mentioned above, the material preparation and mold clamping step can further include forming a recessed accommodating portion 14 on the outer side portion of at least one of the multiple housing portions 12, wherein the accommodating portion 14 is configured to accommodate the fluid plastic. This facilitates defining the shape of the connecting member 38 and simplifies the injection molding process.

According to the manufacturing method provided in the embodiments of the present invention, the material preparation and mold clamping step can further include forming accommodating portion 14 on the outer side portion of each housing portion 12, wherein the adjacent housing portions 12 are constructed such that the accommodating portions 14 on the adjacent housing portions 12 engage with each other to provide space for accommodating the fluid plastic.

In the embodiment, in the connecting member 38 formed by the solidified injection-molded plastic, one portion is distributed within the accommodating portion 14 of one of the adjacent housing portions 12, and another portion is distributed within the accommodating portion 14 of the other of the adjacent housing portions 12. The two portions are connected to each other and respectively adhere to the corresponding housing portions 12, thereby providing greater bonding strength for the connection of the adjacent housing portions 12 to achieve better connection reliability.

According to the manufacturing method provided in the embodiments of the present invention, the material preparation and mold clamping step can further include: configuring a housing portion 12 provided with an accommodating portion 14, such that the accommodating portion 14 is arranged with a first portion 16 open at the edge portion 30 of the housing portion 12 configured to connect adjacent housing portions 12, and that the accommodating portion 14 is arranged with a second portion 18 communicating with the first portion 16, located on the side of the first portion 16 away from the edge portion 30. That is, the accommodating portion 14 is provided with the first portion 16 and the second portion 18, with the first portion 16 communicating with the second portion 18. The first portion 16 is located at the edge portion 30 where the housing portion 12 connects to another housing portion 12, and the second portion 18 is located on the side of the first portion 16 away from the edge portion 30. The second portion 18 has a first width at a first position and a second width at a second position, wherein the first width is smaller than the second width, and the first position is closer to the first portion compared to the second position 16.

Firstly, it is necessary to clarify that the term "edge portion 30" as used herein derives from the concept of the thickness of the housing portion 12. Specifically, since a housing portion 12 forms the housing body 10 together with other housing portions 12, such as the hollow tube housing of a fuse, each housing portion 12 essentially serves as part of the wall portion of the housing body 10, defining the hollow portion of the housing body 10. The wall portion reflects the thickness of the housing body 10. In other words, the shape of each housing portion 12 in space is generally concave on one side, to define part of the hollow portion of the housing body 10 to be ultimately formed. Therefore, the thickness of each housing portion 12 is the thickness of the wall portion of the corresponding portion of the housing body 10.

With the concept of the thickness of the housing portion 12 clarified, the edge portion 30, based on the concept of the thickness of the housing portion 12, essentially represents the exposed thickness face of the housing portion 12. The thickness face generally appears as a strip, with its width corresponding to the thickness of the housing portion 12.

Accordingly, the opening of the first portion 16 at the edge portion 30 means that one side of the first portion 16 is open at the edge portion 30 (indicating the structure of the first portion 16 rather than implying that the edge portion 30 is formed by a mechanism capable of performing an "opening" action). This forms an opening, thereby allowing communication with the space outside the first portion 16. In the embodiment, the first portion 16 extends from the opening in a direction away from the edge portion 30 toward the second portion 18.

Optionally, as mentioned in the foregoing description, the second portion 18 includes a first position closer to the first portion 16 and a second position farther from the first portion 16. The first position is narrower relative to the second position, meaning it has a smaller width.

In an embodiment, the widths of the first position and the second position can be determined as follows. Specifically, as described above, the edge portion 30 of the housing portion 12 is essentially a strip-like thickness face. When adjacent housing portions 12 are connected, their respective edge portions 30 are connected, and thus the orientations of the edge portions 30 of both configured for mutual connection are essentially the same. In the embodiment, the abutting of two edge portions 30 forms a connecting seam 24. Since the edge portion 30 is strip-like, the connecting seam 24 is also strip-like, with its extension direction lying in the plane of the thickness face. The direction parallel to the thickness face of the connecting seam 24 is used as the width direction for determining the first position and the second position.

In the embodiment, within the composite structure of the completed electrical component, forces can act between the housing portion 12 and the connecting member 38 that tend to separate them; and the forces are often perpendicular to the extension direction of the connecting seam 24, or, equivalently, perpendicular to the thickness face. In other words, the forces cause the connecting member 38 to tend to detach from the accommodating portion 14 through the aforementioned opening. However, as described above, the first portion 16 and the second portion 18, especially the second portion 18, effectively inhibit this tendency. Because the first position is narrower than the second position, when the connecting member 38 is subjected to the tensile force, the part of the connecting member 38 corresponding to the second position cannot pass through the narrower first position due to its greater width.

Based on the shape of the second portion 18 described above, the second portion 18 can have more specific and different shapes. Specifically, according to the manufacturing method provided by the present invention, the material preparation and mold clamping step can further include: configuring a housing portion 12 provided with an accommodating portion 14, such that the width of the second portion 18 gradually increases from a side where the first portion 16 is located to a side away from the first portion 16. Thus, in the embodiment, the second portion 18 gradually increases in width in the direction away from the first portion 16, presenting a "conical" structure.

In the embodiment, the material preparation and mold clamping step can further include: constructing the housing portion 12 provided with the accommodating portion 14 to have multiple second portions 18, wherein the multiple second portions 18 are arranged, for example, at intervals along the extension direction of the first portion 16, namely, along the extension direction of the connecting seam 24 mentioned above. In this way, according to the manufacturing method provided by the present invention, the second portions 18 provide a certain degree of anti-detachment protection at different positions along the connecting seam 24.

In another embodiment of the manufacturing method provided by the present invention, the material preparation and mold clamping step can further include: configuring a housing portion 12 provided with an accommodating portion 14, such that the width of the second portion 18 has at least once abrupt change from the side where the first portion 16 is located to the side away from the first portion 16.

In the example, unlike the manner of gradually extending the width of the second portion 18 referred to in the above description herein, the width of the second portion 18 in the example has at least once abrupt change. The term "abrupt change" as used herein should be understood to include the following meaning. Along the direction away from the first portion 16, at a position (referred to as the abrupt change position), the width of the second portion 18 undergoes a significant change compared to the position before it, and the change gives the second portion 18 a stepped appearance.

According to the manufacturing method provided by the present invention, when the portion of the connecting member 38 within the second portion 18 attempts to detach from the opening of the first portion 16, the portion of the connecting member 38 within the second portion 18, which has a greater width beyond the abrupt change position, will directly jam against the step position of the second portion 18. However, the step-like abrupt change mentioned above can restrain the outward movement tendency of the connecting member 38.

According to the manufacturing method provided by the present invention, the material preparation and mold clamping step can further include: configuring a housing portion 12 provided with an accommodating portion 14, such that the accommodating portion 14 is provided with multiple first portions 16 arranged at intervals along the edge portion 30, and that the accommodating portion 14 is provided with multiple second portions 18 as described above, with each second portion 18 communicating with a corresponding first portion 16.

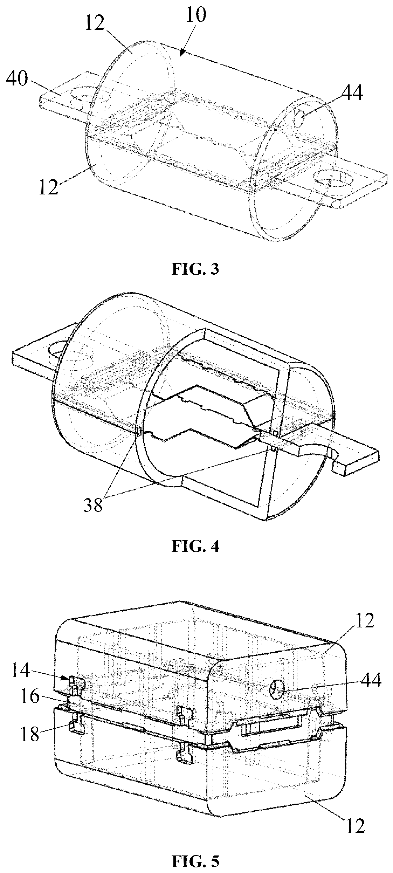

Referring to FIGS. 3 and 4, taking the housing body 10 including two housing portions 12 as an example, FIGS. 3 and 4 show a first portion 16 arranged in a surrounding manner and multiple second portions 18 communicating with the first portion 16. For one housing portion 12, two second portions 18 can be arranged, for instance, on two side faces of the housing portion 12 that do not pass through the conductor 40.

Referring to FIG. 5, another example is illustrated in FIG. 5 where the second portion 18 is not shown, but it can be seen that the first portion 16 is filled with the connecting member 38. In the example provided in FIG. 5, the edge portions 30, i.e., the thickness surfaces, of adjacent housing portions 12 are configured with filling portions 22 of the connecting member 38 that can accommodate the solidified fluid plastic, wherein, apparently, the filling portions 22 are recessed. The first portion 16 can connect the filling portions 22 formed on the thickness surfaces to the external environment to allow the fluid plastic to be injected into the filling portions 22. In the example, multiple first portions 16 can be arranged along the connecting seam 24 at intervals. For instance, one first portion 16 can be arranged on each side that does not pass through the conductor 40, thus allowing the fluid plastic to be injected into the filling portions 22.

According to the manufacturing method provided by the present invention, the material preparation and mold clamping step can further include: configuring a housing portion 12 provided with an accommodating portion 14, such that an inner side portion of the housing portion 12 provided with the accommodating portion 14 is provided with a protrusion 20 corresponding in position to the accommodating portion 14.

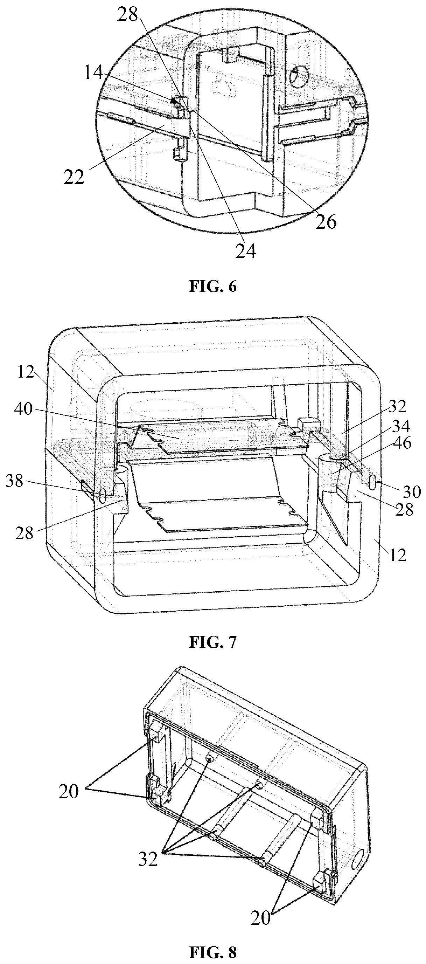

According to the manufacturing method provided by the present invention, the protrusion 20 formed on the inner side portion of the housing portion 12 has a reinforcing function. Specifically, as shown in FIG. 6, the reinforcing function is reflected in the protrusion 20 being positioned corresponding to the accommodating portion 14. In this way, the thinner region of the housing portion 12 caused by the structure of the accommodating portion 14 is reinforced by the protrusion 20 on the inner side, ensuring that the strength of the housing portion 12 is not reduced due to the arrangement of the accommodating portion 14. In some embodiments, since only one housing portion 12 can be provided with an accommodating portion 14 in the adjacent housing portions 12, correspondingly, the protrusion 20 can only be formed on the inner side of the housing portion 12 corresponding to the position of the accommodating portion 14. Moreover, in other examples, if the adjacent housing portions 12 are provided with the accommodating portions 14, the protrusions 20 can be provided correspondingly.

In some embodiments, the provision of the protrusion 20 during integral injection molding can limit displacement and deviation of the electrical component along the length direction of the electrical component. At the same time, considering the usage characteristics of the electrical component, the protrusion 20 can also enhance the strength of the housing body to a certain extent.

Furthermore, in some embodiments, no protrusions 20 are provided around the holes in the housing body 10 through which the conductor 40 passes.

Additionally, as an additional example based on the example where the protrusion 20 is provided on the inner side of the adjacent housing portions 12, the projections 20 located in the adjacent housing portions 12, respectively, can snap to one another when the adjacent housing portions 12 are engaged. As shown in FIG. 6, a recessed structure is further formed on the protrusion 20. In another housing portion 12 (not shown) that is coupled to the housing portion 12, the corresponding position of the protrusion 20 can be provided with a boss structure. The boss structure can be slightly larger than the recessed structure in size, embedding into the recessed structure to achieve a snapping connection between the two protrusions 20. Thus, the connection strength between adjacent housing portions 12 is increased.

Additionally, as an alternative example, the protrusion 20 can serve as a sealing structure for the fluid plastic during the second injection molding process. Specifically, in the adjacent housing portions 12, the protrusion 20 of one housing portion 12 can extend through the gap formed by the thickness surface of the adjacent housing portion 12 and abut the inner side of the other housing portion 12. Therefore, the gap between the protrusion 20 and the inner side of the other housing portion 12, together with the connecting seam 24 formed by the gap between the two of the aforementioned thickness faces, forms a labyrinth structure, preventing the fluid plastic from flowing into the combined housing body 10.

According to the manufacturing method provided in the embodiments of the present invention, the material preparation and mold clamping step can further include:
forming multiple accommodating portions 14 on an outer side portion of each housing portion 12, and configuring the housing portion 12 provided with the accommodating portion 14, such that the housing portion 12 provided with the accommodating portion 14 is provided with protrusions 20 corresponding to individual accommodating portions 14, and adjacent protrusions 20 are connected. By connecting adjacent protrusions 20, the protrusions 20 achieve better integrity, which is more advantageous for increasing the strength of the housing body 10.

According to the manufacturing method provided in the embodiments of the present invention, the material preparation and mold clamping step can further include:
forming a recessed filling portion 22 at the edge portion 30 of the housing portion 12 configured to connect adjacent housing portions 12, wherein the adjacent housing portions 12 are configured such that the filling portions 22 located on the adjacent housing portions 12 engage with each other to provide space for accommodating fluid plastic.

In the embodiment, as described above, on the housing portion 12 provided with the accommodating portion 14, the filling portion 22 communicates with the accommodating portion 14, and the fluid plastic is configured to be injected into the filling portion 22 through the accommodating portion 14.

According to the manufacturing method provided in the embodiments of the present invention, the material preparation and mold clamping step can further include:
forming a recessed filling portion 22 at the edge portion 30 of the housing portion 12 configured to connect adjacent housing portions 12, with the filling portion 22 also configured to be open from the outer side portion of the housing portion 12, wherein the adjacent housing portions 12 in the embodiment are configured such that the filling portions 22 located on the adjacent housing portions 12 engage with each other to provide space for accommodating fluid plastic.

Unlike the above example, in the example, the filling portion 22 can no longer communicate with the external environment via the accommodating portion 14. Instead, they can directly communicate with the external environment through an open structure provided on the outer side portion of the housing portion 12, for example, through an injection molding hole with an opening located on the outer side portion that directly communicates with the filling portion 22; and the fluid plastic can then be injected into the filling portion 22.

According to the manufacturing method provided in the embodiments of the present invention, the material preparation and mold clamping step can further include:
configuring adjacent housing portions 12 such that the connecting seam 24 formed by the adjacent housing portions 12 is provided with a turning extension segment 26 located on a side where the internal space of the housing body 10 is located. In the embodiment, the turning extension segment 26 extends from the filling portion 22 and terminates at the internal space of the housing body 10, with at least one change in the extension direction.

In the embodiment, during the second injection molding, the fluid plastic can flow into the housing body 10 under high temperature and high pressure. By using the turning extension segment 26, the connecting seam 24 essentially forms a labyrinth sealing structure with a change in extension direction, thereby preventing fluid plastic from entering the interior of the housing body 10.

In one embodiment, using FIG. 5 as an example, an example of a housing body 10 is provided in FIG. 5. In the example, the turning extension segment 26 can be jointly defined by the step portion 28 on the interior of a housing portion 12 and the interior side of the adjacent housing portion 12 of the housing portion 12. The extension of the step portion 28 can be the same as the extension of the aforementioned protrusion 20 so that the turning extension segment 26 can be perpendicular to the portion of the connecting seam 24 between the thickness faces.

According to the manufacturing method provided in the embodiments of the present invention, the material preparation and mold clamping step can further include:
forming a protruding positioning portion 32 on the inner side portion of the housing portion 12, with the portion of the positioning portion 32 exceeding the housing portion 12 configured to connect adjacent housing portions 12. In the embodiment, on the inner side portion of the other housing portion 12, adjacent to the housing portion 12 where the positioning portion 32 is located, a recessed portion 34 corresponding in position to the positioning portion 32 is formed, wherein the recessed portion 34 is configured to allow the positioning portion 32 to be inserted during the combination of multiple housing portions 12. In the embodiment, through the snap-in fit, the connection strength between adjacent housing portions 12 is further increased.

Referring to FIGS. 6 and 7, in the embodiment, the positioning portion 32 can be, for example, a columnar structure, such as a cylindrical structure. The recessed portion 34 can be, for example, a recessed structure provided on the end surface of the columnar portion. In one embodiment, as an example, the end surface of the columnar portion can be flush with the end surface of the step portion 28, i.e., raised beyond the thickness surface of the housing portion 12 where the columnar portion is located.

According to the manufacturing method provided in the embodiments of the present invention, the material preparation and mold clamping step can further include:
forming a protruding structure 46 on the inner side portion of the housing portion 12, wherein the protruding structure 46 refers to the aforementioned columnar portion, corresponding to FIGS. 5 and 7, which is equivalent to protruding from the inner side portion of the housing portion 12; and configuring the housing portion 12 such that the housing portion 12 is provided with a reinforcing structure 36 connecting the protruding structure 46 and the inner side portion of the housing portion 12. As shown in FIG. 7, the reinforcing structure 36 can be, for example, a reinforcement rib connecting the protruding structure 46 and the inner side portion of the housing portion 12. This improves the connection strength between the protruding structure 46 and the housing portion 12 where it is located.

According to the manufacturing method provided in the embodiments of the present invention, the assembly and mold clamping step further includes: configuring the conductor 40 such that the conductor 40 has a through hole 42 connecting both sides of the conductor 40. Fluid plastic is also injected into the through hole 42 to connect the cured fluid plastic on both sides of the conductor 40 after curing. In the embodiment, the two sides of the conductor 40 respectively face two housing portions 12.

In one embodiment, the conductor 40, also referred to as a fuse element as described above, can integrally include wiring structures at both ends and a fusible structure in the middle of the wiring structures. In one embodiment, the wiring structures can, for example, be plate-like. In one embodiment, the conductor 40 is integrally passed through the housing body 10, with the two wiring structures clamped between two housing portions 12. The two sides of each wiring structure, i.e., "both sides of the conductor 40" as referred to above, are the sides of the wiring structures referred to herein.

In one embodiment, the housing body 10, i.e., the housing body 10 formed by assembling the housing portions 12, can be respectively provided with holes for the conductor 40 to pass through on two opposite side portions (for a cylindrical housing body 10, essentially on the two base portions). In one embodiment, the two wiring structures correspondingly are threaded in the two through holes 42.

In one embodiment, fluid plastic is also filled between the interior of the through hole 42 and the exterior of the wiring structure passing through the through hole 42, thereby connecting the wiring structure to the housing body 10. In one embodiment, the through hole 42 on the conductor 40, specifically the through hole 42 on the wiring structure, can allow the fluid plastic to be filled therein. After curing, the plastic inside the through hole 42 can connect the plastic on both sides of the wiring structure.

In the embodiment, without the arrangement of the through hole 42, the plastic on both sides of the wiring structure is not connected. Therefore, after the fluid plastic cures, the shrinkage of the plastic on both sides of the wiring structure is uneven: the edges in the width direction of the wiring structure are relatively uniform, but the shrinkage in the middle part of the wiring structure is uneven. After the through hole 42 is arranged to connect the plastics on both sides, the plastic inside the through hole 42 serves as a "bridge", facilitating the transfer of force between the plastics on both sides and promoting the shrinkages of the plastics on both sides to a relatively uniform state, thus reducing the internal stress of the plastic after shrinkage.

Additionally, in the embodiment, the plastic inside the through hole 42 serves as a "bridge" to connect the plastics on both sides of the wiring structure, which is equivalent to further bridging the two housing portions 12 together. This further enhances the strength and structural stability of the housing body 10.

In the embodiment, as an example, two through holes 42 can be provided, but it is not limited to this. One, three, four, or even more through holes 42 can be provided.

In other examples, considering that the interior cavity of the housing body 10 has a performance need for compressive strength, an anti-plastic-shrinkage groove surface can be reserved on the portion of the wiring structure that is connected to the two housing portions 12. A closed groove can also be formed at a corresponding position of the wiring structure corresponding to the anti-plastic-shrinkage groove surface. During the second injection molding, the fluid plastic will fill the anti-plastic-shrinkage groove surface and the closed groove that are opposite to each other, thereby storing an amount of fluid plastic. After the housing body 10 cools, although there can be some shrinkage gaps between the wiring structure and the housing body 10, the amount of the plastic, stored in the anti-plastic-shrinkage groove surface and the closed groove that are opposite to each other, can compensate for the shrinkage, and thus the pressure sealing of the housing body 10 can still be ensured. This also further improves the sealing strength of the housing body 10 so that it does not have a series of problems such as pressure loss and insufficient strength of the housing body 10, making it more suitable for a wider range of applications.

Considering the operating environment in the electrical field, to enhance the stability of pressure sealing and structural strength inside the housing body 10 under various working conditions (e.g., changes in air pressure), the sealed cavity formed inside the integrally injection-molded upper housing portion 12 and lower housing portion 12 requires high-pressure resistance capability (1-2500 MPa, or even higher). Through the manufacturing method provided in the embodiments of the present invention, which is compared to manual adhesive bonding and split assembly processes, the complete housing body 10 is formed by using an integrally molded die, and consideration and design are made through the different wall thicknesses of the housing body 10. The electrical sealing performance, the high-pressure resistance stability, the insulation reliability, and the anti-shock and anti-crack performance of the housing body 10 are significantly improved in terms of quality. For example, when the wall thickness of the housing body 10 is greater than 3 mm, the interior cavity of the housing body 10 can withstand a pressure greater than 1982.5 MPa at a current of 20 kA for the reference fuse; and the interior cavity of the housing body 10 can withstand a pressure greater than 49 MPa at a current of 1 kA for the fuse.

According to the manufacturing method provided in the embodiments of the present invention, the manufacturing method further includes a testing and processing step of the composite structure. The testing and processing step of the composite structure can include: testing the resistance of the conductor 40 of the composite structure; filling the housing body 10 of the composite structure with insulating particles and sealing the housing body 10 to form the electrical component; and conducting electrical performance and insulation performance tests on the electrical component.

In an embodiment, the testing and processing step essentially follow the existing processes used for manufacturing electrical components such as fuses. After testing the resistance of the fuse element, insulating housing bodies 10 such as quartz sand are filled into the housing body 10 of the composite structure, where the quartz sand can be filled via a sand vibration hole 44 formed on the housing body 10 (specifically on one of the housing portions 12). Once the quartz sand is filled, the hole is sealed, thereby forming the finished fuse. Finally, tests for the electrical performance and the insulation performance are conducted on the fuse.

In the embodiment, the testing and processing step is relatively independent of the previously described material preparation and mold clamping step, the transfer step, and the assembly and mold clamping step. That is, the testing and processing step do not directly affect the material preparation and mold clamping step, the transfer step, and the assembly and mold clamping step. However, because of the aforementioned material preparation and mold clamping step, the transfer step, and the assembly and mold clamping step provided in the embodiments of the present invention, the testing and processing step is directly allowed to be executed on the composite structure after obtaining the composite structure in the embodiments of the present invention. This eliminates the need for additional post-processing operations, such as dispensing operation or clamp mounting, on the housing body 10. Therefore, in the embodiments of the present invention, the direct execution of the testing and processing step is enabled on the composite structure after obtaining the composite structure, which indicates that the manufacturing process for electrical components using the manufacturing method provided by the embodiments of the present invention is significantly simplified.

According to the second aspect of the present invention, an electrical component is provided, which includes a housing body 10. The housing body 10 includes multiple housing portions 12 and a connecting member 38. In the embodiment, the housing portion 12 is configured to be injection molded, and the connecting member 38 is located between adjacent housing portions 12 and configured to connect the combined multiple housing portions 12 to form the housing body 10. In the embodiment, a portion of the connecting member 38 is located on the outer side portion of at least one of the adjacent housing portions 12. Thus, by forming the housing portion 12 through injection molding and then connecting the housing portion 12 using the connecting member 38, with a portion of the connecting member 38 positioned on the outer side portion of at least one of the adjacent housing portions 12, the overall integrity and strength of the assembled housing portions 12 are effectively enhanced.

As an example, the electrical component in the embodiment can be manufactured according to the manufacturing method provided in the first aspect of the embodiments of the present invention. The terminology appearing in the second aspect of the embodiments of the present invention is consistent with the terminology used in the first aspect of the embodiments of the present invention, and refers to the same content and has the same beneficial effects, which will not be repeated here. Furthermore, as an example, the electrical component can, for example, be a fuse, as has likewise been described herein as described above.

Optionally, the outer side portion of at least one of the multiple housing portions 12 mentioned above is provided with a recessed accommodating portion 14, wherein the accommodating portion 14 is configured to accommodate a portion of the connecting member 38.

Optionally, the outer side portion of each housing portion 12 is provided with an accommodating portion 14, with adjacent housing portions 12 configured such that the accommodating portions 14 on the adjacent housing portions 12 engage with each other to provide space for accommodating a portion of the connecting member 38.

Optionally, the accommodating portion 14 is arranged with a first portion 16 open at the edge portion 30 of the housing portion 12 configured to connect adjacent housing portions 12, and the accommodating portion 14 is arranged with a second portion 18 communicating with the first portion 16, located on the side of the first portion 16 away from the edge portion 30. The second portion 18 has a first width at a first position and a second width at a second position, wherein the first width is smaller than the second width, and the first position is closer to the first portion compared to the second position 16.

Optionally, the width of the second portion 18 gradually increases from a side where the first portion 16 is located to a side away from the first portion 16.

Optionally, the width of the second portion 18 has at least once abrupt change from the side where the first portion 16 is located to the side away from the first portion 16.

Optionally, the accommodating portion 14 is provided with multiple first portions 16 arranged at intervals along the edge portion 30, and the accommodating portion 14 is arranged with multiple second portions 18, with each second portion 18 communicating with a corresponding first portion 16.

Optionally, the inner side portion of the housing portion 12 is provided with a protrusion 20 corresponding in position to the accommodating portion 14, and the protrusion 20 protrudes from the inner side portion of the housing portion 12 toward a direction away from the inner side portion of the housing portion 12.

Optionally, the outer side portion of each housing portion 12 forms multiple accommodating portions 14, the inner side portion of the housing body 10 is provided with protrusions 20 corresponding one-to-one to the accommodating portions 14 formed by the housing body 10, and adjacent protrusions 20 are connected to each other.

Optionally and additionally, the adjacent housing portions 12 are constructed such that the connecting seam 24 formed by the adjacent housing portions 12 is provided with a turning extension segment 26 located on a side where the internal space of the housing body 10 is located.

The turning extension segment 26 extends from the filling portion 22 and terminates at the internal space of the housing body 10, with at least one change in extension direction.

One of the adjacent housing portions 12 is provided with a step portion 28 protruding from the inner side portion of the housing portion 12, and the step portion 28 is connected to the edge portion 30 of one of the adjacent housing portions 12 configured to connect to the other of the adjacent housing portions 12 to form a step surface. That is, the step portion 28 is connected to an edge portion 30 where one of the two adjacent housing portions 12 is connected to the other, thus forming a step surface.

The inner side portion of the other of the adjacent housing portions 12 engages with the step surface to form the turning extension segment 26, wherein the step portion 28 is formed on the protrusion 20.

Optionally, a recessed filling portion 22 is formed on the edge portion 30 of the housing portion 12 configured to connect adjacent housing portions 12, wherein adjacent housing portions 12 are constructed such that the filling portions 22 on the adjacent housing portions 12 engage with each other to provide space for accommodating the connecting member 38.

Optionally, the adjacent housing portions 12 are constructed such that the accommodating portion 14 on the same housing portion 12 communicates with the filling portion 22.

Optionally, as an alternative, the adjacent housing portions 12 are constructed such that the connecting seam 24 formed by the adjacent housing portions 12 is provided with a turning extension segment 26 located on a side where the internal space of the housing body 10 is located.

The turning extension segment 26 extends from the filling portion 22 and terminates at the internal space of the housing body 10, with at least one change in extension direction.

Optionally, as an alternative, one of the adjacent housing portions 12 is provided with a step portion 28 protruding from the inner side portion of the housing portion 12, and the step portion 28 is connected to the edge portion 30 of one of the adjacent housing portions 12 configured to connect to the other of the adjacent housing portions 12 to form a step surface.

An edge portion 30 of the other of the adjacent housing portions 12 configured to connect with one of the adjacent housing portions 12 engages with the step surface to form a turning extension segment 26. That is, the edge portion 30 of the other of the two adjacent housing portions 12 connected to the one engages with the step surface to form the turning extension segment 26.

Optionally, a protruding positioning portion 32 is formed on the inner side portion of the housing portion 12, and a portion of the positioning portion 32 exceeding the housing portion 12 is configured to connect adjacent housing portions 12.

On the inner side portion of the other housing portion 12, adjacent to the housing portion 12 where the positioning portion 32 is located, a recessed portion 34 corresponding in position to the positioning portion 32 is formed, wherein the recessed portion 34 is configured to allow the positioning portion 32 to be inserted during the combination of multiple housing portions 12.

Optionally, one of the adjacent housing portions 12 is provided with a step portion 28 protruding from the inner side portion of the housing portion 12, and the step portion 28 is connected to the edge portion 30 of one of the adjacent housing portions 12 configured to connect to the other of the adjacent housing portions 12 to form a step surface.

An edge portion 30 of the other of the adjacent housing portions 12 configured to connect with one of the adjacent housing portions 12 engages with the step surface to form a connecting seam 24. That is, the edge portion 30 of the other of the two adjacent housing portions 12 connected to the one engages with the step surface to form the connecting seam 24. The connecting seam 24 is provided with a turning extension segment 26 that changes its extension direction once.

The recessed portion 34 is formed on the step portion 28.

Optionally, a protruding structure 46 is formed on the inner side portion of the housing portion 12, wherein the protruding structure 46 is provided with a recessed portion 34. The housing portion 12 is provided with a reinforcing structure 36 connecting the protruding structure 46 and the inner side portion of the housing portion 12.

Optionally, the electrical component includes a conductor 40, and the conductor 40 passes through the housing body 10.

The connecting member 38 is also located between the conductor 40 and the housing portion 12 to connect the housing portion 12 and the conductor 40.

The conductor 40 is provided with a through hole 42 connecting both sides of the conductor 40, and a portion of the connecting member 38 passes through the through hole 42 to connect a portion of the connecting member 38 arranged on each side of the conductor 40, respectively.

The two sides of the conductor 40 respectively face two housing portions 12.

The above are merely optional embodiments of the present invention and do not limit the scope of protection of the present invention. Any equivalent structural transformations made based on the inventive concepts of the present invention using the content of the specification and drawings, or any direct/indirect applications in other related technical fields, are all included within the scope of protection of the present invention.

### INDUSTRIAL PRACTICALITY

According to the manufacturing method for the electrical component provided by the present invention, the tedious dispensing and combination assembly process of the housing body can be omitted, simplifying the manufacturing process. Moreover, the sealing performance of the housing body is improved, a large amount of time is saved, and the problem of glue overflow on the surface of the housing body after dispensing can also be avoided.

## Claims

1. A manufacturing method for an electrical component, **characterized in that** the electrical component comprises a housing body and a conductor passing through the housing body; and the manufacturing method comprises:
a material preparation and mold clamping step, executed within a mold, wherein the mold is clamped to injection-mold multiple housing portions;
a transfer step: transferring the multiple housing portions and the conductor to a processing position, combining the multiple housing portions, and passing the conductor through the combined multiple housing portions; and
an assembly and mold clamping step: clamping the mold, injecting fluid plastic between adjacent housing portions, and injecting the fluid plastic between the conductor and housing portions adjacent to the conductor, and curing the fluid plastic to form the housing body and a composite structure of the housing body and the conductor, wherein, during an execution of the assembly and mold clamping step, the material preparation and mold clamping step is simultaneously executed within the mold for a next electrical component to form the multiple housing portions for the next electrical component; and
after the assembly and mold clamping step, the transfer step and the assembly and mold clamping step are sequentially executed for the next electrical component to form the composite structure of the next electrical component.

2. The manufacturing method according to claim 1, wherein the material preparation and mold clamping step further comprises placing the conductor in a to-be-operated position within the mold, and the transfer step further comprises transferring the conductor from the to-be-operated position to the processing position.

3. The manufacturing method according to claim 1, wherein the material preparation and mold clamping step further comprises forming the multiple housing portions at different positions, and at least two of the multiple housing portions are arranged in a staggered manner along an extension direction of the housing body.

4. The manufacturing method according to claim 1, wherein the assembly and mold clamping step further comprises:
placing and curing the fluid plastic on an outer side portion of at least one of adjacent housing portions.

5. The manufacturing method according to claim 4, wherein the material preparation and mold clamping step further comprises:
forming a recessed accommodating portion on an outer side portion of at least one of the multiple housing portions, wherein the accommodating portion is configured to accommodate the fluid plastic.

6. The manufacturing method according to claim 5, wherein the material preparation and mold clamping step further comprises:
forming accommodating portion on an outer side portion of each housing portion, wherein the adjacent housing portions are constructed such that the accommodating portions on the adjacent housing portions engage with each other to provide a space for accommodating the fluid plastic.

7. The manufacturing method according to claim 5, wherein the material preparation and mold clamping step further comprises:
configuring the housing portion provided with the accommodating portion such that the accommodating portion is arranged with a first portion open at an edge portion of the housing portion configured to connect adjacent housing portions, and that the accommodating portion is arranged with a second portion communicating with the first portion, located on a side of the first portion away from the edge portion; and the second portion has a first width at a first position and a second width at a second position, wherein the first width is smaller than the second width, and the first position is closer to the first portion compared to the second position.

8. The manufacturing method according to claim 7, wherein the material preparation and mold clamping step further comprises:
configuring the housing portion provided with the accommodating portion such that a width of the second portion gradually increases from a side where the first portion is located to a side away from the first portion.

9. The manufacturing method according to claim 7, wherein the material preparation and mold clamping step further comprises:
configuring the housing portion provided with the accommodating portion such that a width of the second portion has at least once abrupt change from a side where the first portion is located to a side away from the first portion.

10. The manufacturing method according to claim 7, wherein the material preparation and mold clamping step further comprises:
configuring the housing portion provided with the accommodating portion such that the accommodating portion has multiple first portions arranged at intervals along the edge portion, and that the accommodating portion has multiple second portions, with each second portion communicating with a corresponding first portion.

11. The manufacturing method according to claim 5, wherein the material preparation and mold clamping step further comprises:
configuring the housing portion provided with the accommodating portion such that an inner side portion of the housing portion provided with the accommodating portion is provided with a protrusion corresponding in position to the accommodating portion.

12. The manufacturing method according to claim 11, wherein the material preparation and mold clamping step further comprises:
forming multiple accommodating portions on an outer side portion of each housing portion, and configuring the housing portion provided with the accommodating portion, such that the housing portion provided with the accommodating portion is provided with protrusions corresponding to individual accommodating portions, and adjacent protrusions are connected.

13. The manufacturing method according to claim 5, wherein the material preparation and mold clamping step further comprises:
forming a recessed filling portion at the edge portion of the housing portion configured to connect adjacent housing portions,
wherein the adjacent housing portions are configured such that the filling portions located on the adjacent housing portions engage with each other to provide a space for accommodating the fluid plastic; and
on the housing portion provided with the accommodating portion, the filling portion communicates with the accommodating portion, and the fluid plastic is configured to be injected into the filling portion through the accommodating portion.

14. The manufacturing method according to claim 1, wherein the material preparation and mold clamping step further comprises:
forming a recessed filling portion at the edge portion of the housing portion configured to connect adjacent housing portions, with the filling portion further configured to be open from the outer side portion of the housing portion,
wherein the adjacent housing portions are configured such that the filling portions located on the adjacent housing portions engage with each other to provide a space for accommodating a fluid plastic.

15. The manufacturing method according to claim 13 or 14, wherein the material preparation and mold clamping step further comprises:
configuring the adjacent housing portions such that a connecting seam formed by the adjacent housing portions is provided with a turning extension segment located on a side where an internal space of the housing body is located; and
the turning extension segment extends from the filling portion and terminates at an internal space of the housing body, with at least one change in an extension direction.

16. The manufacturing method according to any one of claims 1 to 14, wherein the material preparation and mold clamping step further comprises:
forming a protruding positioning portion on the inner side portion of the housing portion, with a portion of the positioning portion exceeding the housing portion configured to connect adjacent housing portions; and
forming, on an inner side portion of another housing portion, adjacent to the housing portion where the positioning portion is located, a recessed portion corresponding in position to the positioning portion, wherein the recessed portion is configured to allow the positioning portion to be inserted during a combination of multiple housing portions.

17. The manufacturing method according to any one of claims 1 to 14, wherein the material preparation and mold clamping step further comprises:
forming a protruding structure on an inner side portion of the housing portion, and configuring the housing portion such that the housing portion is provided with a reinforcing structure connecting the protruding structure and the inner side portion of the housing portion.

18. The manufacturing method according to any one of claims 1 to 14, wherein the assembly and mold clamping step further comprises:
configuring the conductor such that the conductor is provided with a through hole connecting both sides of the conductor; the fluid plastic is further injected into the through hole to connect the cured fluid plastic on both sides of the conductor after curing; and the two sides of the conductor respectively face two housing portions.

19. The manufacturing method according to any one of claims 1 to 14, wherein the manufacturing method further comprises a testing and processing step of the composite structure:
testing a resistance of the conductor of the composite structure;
filling the housing body of the composite structure with insulating particles and sealing the housing body to form the electrical component; and
conducting electrical performance and insulation performance tests on the electrical component.

20. An electrical component, **characterized in that** the electrical component comprises a housing body, and the housing body comprises:
multiple housing portions, with the housing portions configured to be formed by injection molding; and
a connecting member, wherein the connecting member is located between adjacent housing portions and configured to connect the combined multiple housing portions to form the housing body,
wherein a portion of the connecting member is located on an outer side portion of at least one of the adjacent housing portions.

21. The electrical component according to claim 20, wherein
an outer side portion of at least one of the multiple housing portions is provided with a recessed accommodating portion, and the accommodating portion is configured to accommodate the portion of the connecting member.

22. The electrical component according to claim 21, wherein
an outer side portion of each housing portion is provided with the accommodating portion, with adjacent housing portions configured such that the accommodating portions on the adjacent housing portions engage with each other to provide a space for accommodating the portion of the connecting member.

23. The electrical component according to claim 21, wherein
the accommodating portion is arranged with a first portion open at an edge portion of the housing portion configured to connect adjacent housing portions, and the accommodating portion is arranged with a second portion communicating with the first portion, located on a side of the first portion away from the edge portion; and the second portion has a first width at a first position and a second width at a second position, wherein the first width is smaller than the second width, and the first position is closer to the first portion compared to the second position.

24. The electrical component according to claim 23, wherein
a width of the second portion gradually increases from a side where the first portion is located to a side away from the first portion.

25. The electrical component according to claim 23, wherein
a width of the second portion has at least once abrupt change from a side where the first portion is located to a side away from the first portion.

26. The electrical component according to claim 23, wherein
the accommodating portion is provided with multiple first portions arranged at intervals along the edge portion, and the accommodating portion is arranged with multiple second portions, with each second portion communicating with a corresponding first portion.

27. The electrical component according to claim 21, wherein
an inner side portion of the housing portion is provided with a protrusion corresponding in position to the accommodating portion, and the protrusion protrudes from the inner side portion of the housing portion toward a direction away from the inner side portion of the housing portion.

28. The electrical component according to claim 27, wherein
an outer side portion of each housing portion forms the multiple accommodating portions, the inner side portion of the housing body is provided with protrusions corresponding one-to-one to the accommodating portions formed by the housing body, and the adjacent protrusions are connected to each other.

29. The electrical component according to claim 27, wherein
the adjacent housing portions are constructed such that a connecting seam formed by the adjacent housing portions is provided with a turning extension segment located on a side where an internal space of the housing body is located, wherein
a recessed filling portion is formed on the edge portion of the housing portion configured to connect the adjacent housing portions; and the turning extension segment extends from the filling portion and terminates at the internal space of the housing body, with at least one change in an extension direction;
one of the adjacent housing portions is provided with a step portion protruding from an inner side portion of the housing portion, and the step portion is connected to the edge portion of one of the adjacent housing portions configured to connect to another of the adjacent housing portions to form a step surface;
an inner side portion of another of the adjacent housing portions engages with the step surface to form the turning extension segment, and
the step portion is formed on the protrusion.

30. The electrical component according to claim 20, wherein
a recessed filling portion is formed on the edge portion of the housing portion configured to connect adjacent housing portions, and
the adjacent housing portions are constructed such that the filling portions on the adjacent housing portions engage with each other to provide a space for accommodating the connecting member.

31. The electrical component according to claim 30, wherein
an outer side portion of at least one of the multiple housing portions is provided with a recessed accommodating portion, and the accommodating portion is configured to accommodate the portion of the connecting member; and
the adjacent housing portions are constructed such that the accommodating portion on a same housing portion communicates with the filling portion.

32. The electrical component according to claim 30, wherein
the adjacent housing portions are constructed such that a connecting seam formed by the adjacent housing portions is provided with a turning extension segment located on a side where an internal space of the housing body is located; and
the turning extension segment extends from the filling portion and terminates at the internal space of the housing body, with at least one change in extension direction.

33. The electrical component according to claim 32, wherein
one of the adjacent housing portions is provided with a step portion protruding from an inner side portion of the housing portion, and the step portion is connected to the edge portion of one of the adjacent housing portions configured to connect to another of the adjacent housing portions to form a step surface; and
the edge portion of another of the adjacent housing portions configured to connect with one of the adjacent housing portions engages with the step surface to form the turning extension segment.

34. The electrical component according to claim 20, wherein
a protruding positioning portion is formed on an inner side portion of the housing portion, and a portion of the positioning portion exceeding the housing portion is configured to connect the adjacent housing portions; and
on an inner side portion of the other housing portion, adjacent to the housing portion where the positioning portion is located, a recessed portion corresponding in position to the positioning portion is formed, wherein the recessed portion is configured to allow the positioning portion to be inserted during a combination of multiple housing portions.

35. The electrical component according to claim 34, wherein
one of the adjacent housing portions is provided with a step portion protruding from an inner side portion of the housing portion, and the step portion is connected to the edge portion of one of the adjacent housing portions configured to connect to another of the adjacent housing portions to form a step surface; and
the edge portion of another of the adjacent housing portions configured to connect with one of the adjacent housing portions engages with the step surface to form a connecting seam; and the connecting seam is provided with a turning extension segment that changes its extension direction once; and
the recessed portion is formed on the step portion.

36. The electrical component according to claim 35, wherein
a protruding structure is formed on an inner side portion of the housing portion, the protruding structure is provided with the recessed portion, and the housing portion is provided with a reinforcing structure connecting the protruding structure and the inner side portion of the housing portion.

37. The electrical component according to any one of claims 20 to 36, wherein the electrical component further comprises a conductor, and the conductor passes through the housing body;
the connecting member is further located between the conductor and the housing portion to connect the housing portion and the conductor;
the conductor is provided with a through hole connecting both sides of the conductor, and a portion of the connecting member passes through the through hole to connect a portion of the connecting member arranged on each side of the conductor, respectively; and
the two sides of the conductor respectively face two housing portions.
